# EUROPEAN PATENT APPLICATION

(11) **EP 0 702 048 A1**
(43) Date of publication of application: **20.03.1996**
(21) Application number: 95305678.5
(22) Date of filing: 15.08.1995
(51) Int. Cl.: C08G 77/50

(54) **Fluorine-containing organo-silicon copolymers**

(30) Priority: 18.08.1994 JP 216503/94
(71) Applicant: Dow Corning Toray Silicone Company Ltd., Tokyo 103 (JP)
(72) Inventor: Kobayashi, Hideki, c/o Dow Corning Toray Silicone, Nihonbashi-muromachi, Chuo-ku, Tokyo 103 (JP)
(74) Representative: Dowden, Marina

(57) **Abstract**

A fluorinated organosilicon copolymer which has a high resistance to depolymerization under acidic or basic conditions is disclosed. The main chain of said copolymer comprises:
(A) at least one silalkylenesiloxane unit having the formula 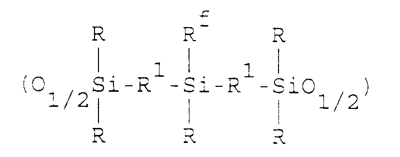 wherein R represents a monovalent hydrocarbon group having 1-10 carbon atoms which is free of aliphatic unsaturation, R¹ represents an alkylene group having 2-10 carbon atoms and R^{f} represents a fluorine-containing monovalent organic group which contains at least four carbon atoms and at least two -CF₂- groups; and
(B) at least one organosiloxane unit with the formula

   (RRSiO_{2/2})

   wherein R is as defined above and R is selected from a hydrogen atom or a monovalent hydrocarbon group having 1-10 carbon atoms.

## Description

This invention relates to novel fluorine-containing organosilicon copolymers. These polymers have low surface tensions, excellent water and oil repellencies, excellent solvent resistance, and the like. Therefore, they are employed as surface modifiers/improvers for a variety of substrates. The following fluorine-containing organosilicon polymers, are already known:
(i) fluorinated polysilethylenesiloxane with the formula: 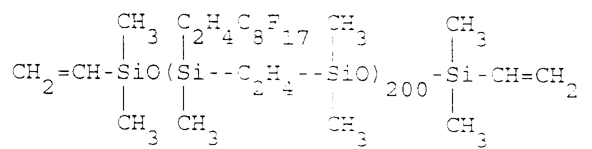 refer to JP-A 4-65432,
(ii) fluorinated polysilethylenesiloxane with the formula: 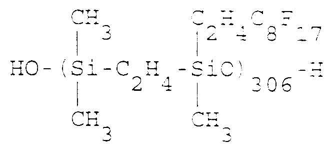 refer to JP-A 4-65433,
(iii) fluorinated polysilethylenesiloxane with the formula: 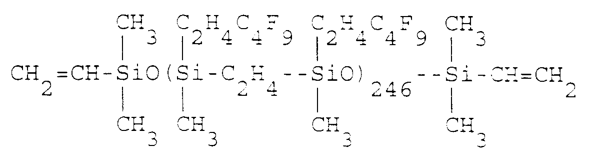 refer to JP-A Hei 4-65430,

and fluorinated polysilethylenesiloxane with the formula: 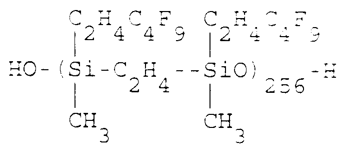
refer to JP-A 4-65431.
However, because perfluorcalkylethyl-bearing silicon atoms are directly bonded to oxygen in each of these fluorinated polysilethylenesiloxanes, they are easily hydrolyzed and depolymerized, under either acidic or basic conditions, and this problem has limited their applications.

The present invention takes as its object the introduction of a novel fluorine-containing organosilicon copolymer that solves the above problem.

The present invention therefore relates to a fluorine-containing organosilicon copolymer that has a degree of polymerization (DP) of 2 to 20,000 and whose main chain comprises:
(A) at least one silalkylenesiloxane unit with the formula: 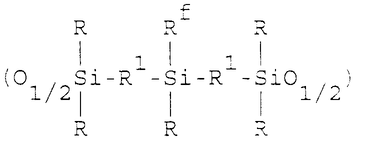 wherein R represents a C₁ to C₁₀ hydrocarbon group which is free of aliphatic unsaturation, R¹ represents a C₂ to C₁₀ alkylene group, and R^{f} represents a fluorine-containing monovalent organic group that contains at least 4 carbon atoms and at least 2 -CF₂- groups;
   and
(B) at least one organosiloxane unit with the formula

   [RRSiO_{2/2}]

   wherein R is as defined above and R is a hydrogen atom or a C₁ to C₁₀ monovalent hydrocarbon group.

The main chain of our fluorinated organosilicon copolymer comprises:
(A) at least one silalkylenesiloxane unit with the formula 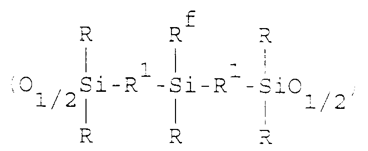 and
(B) at least one organosiloxane unit with the formula

   [RRSiO_{2/2}].

R represents a C₁ to C₁₀ monovalent hydrocarbon group which does not contain aliphatic unsaturation. It is exemplified by alkyl groups such as methyl, ethyl, propyl, butyl, pentyl, hexyl, heptyl, octyl, nonyl, and decyl; aryl groups such as phenyl, tolyl, and xylyl; and aralkyl groups such as benzyl and phenethyl. Methyl and phenyl groups are preferred among the preceding. R¹ represent a C₂ to C₁₀ alkylene group, which may be linear or branched. R¹ is exemplified by ethylene, methylethylene, ethylethylene, propylethylene, butylethylene, propylene, butylene, 1-methylpropylene, pentylene, hexylene, heptylene, octylene, nonylene, and decylene. Among these, ethylene, propylene, butylene, and hexylene are preferred. R^{f} represents a fluorine-containing monovalent organic group that contain at least 4 carbon atoms and at least 2 -CF₂- groups. R^{f} may have a branched, straight-chain, or partially branched straight-chain structure, with straight-chain structures being preferred. R^{f} is specifically exemplified by organic groups with the formula: -(CH₂)ₓC_{y}F_{(2y + 1)}, -(CH₂)ₓO(CH₂)_{z}C_{y}F_{(2y + 1)}, -C₆H₄(CH₂)ₓC_{y}F_{(2y + 1)}, and -C₆H₄O(CH₂)ₓC_{y}F_{(2y + 1)}. The subscripts x and y are each integers having a value of at least 2, and z is zero or an integer having a value of at least 1. Preferred among the preceding are the groups -(CH₂)₂C₄F₉ and -(CH₂)₃C₄F₉. R of component (B) is a C₁ to C₁₀ monovalent hydrocarbon group or a hydrogen atom. It is exemplified by the same monovalent hydrocarbon groups as R, or by alkenyl groups such as vinyl, allyl, butenyl, pentenyl, hexenyl, heptenyl, octenyl, nonenyl, and decenyl. Our fluorinated organosilicon copolymers have a DP of 2 to 20,000, and the DP of each of the siloxane units represented by formulas (A) and (B) preferably is in the range from 1 to 10,000. The bonding pattern of these siloxane units may be random or block. The fluorinated organosilicon copolymers of this invention may have a straight-chain or cyclic molecular structure. For straight-chain structures, the molecular chain terminals are groups with the formula R³R₂SiO-; wherein R is defined as above and R³ is selected from C₁ to C₁₀ monovalent hydrocarbon groups, hydroxyl group, or hydrogen atom; groups with the formula R⁴R^{f}RSi-R¹-R₂SiO-, wherein R, R¹ and R^{f} are defined as above and R⁴ is a hydrogen atom or a hydroxyl group; and the group HO-. The copolymers of the instant invention are fluorine-containing organosilicon copolymers in which the main chain is composed, respectively, of siloxane units with the following formulas, in which m, n, and 2n' are each integers in the range from 1 to 10,000: 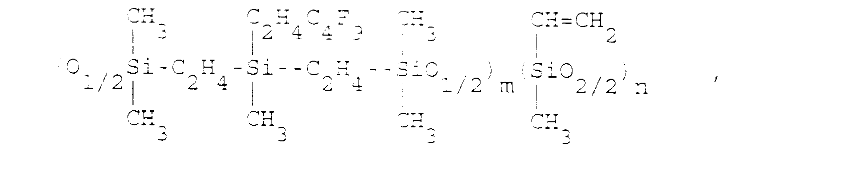 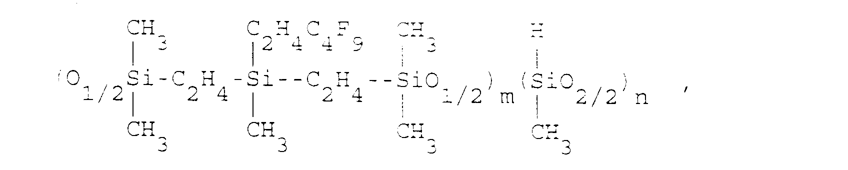 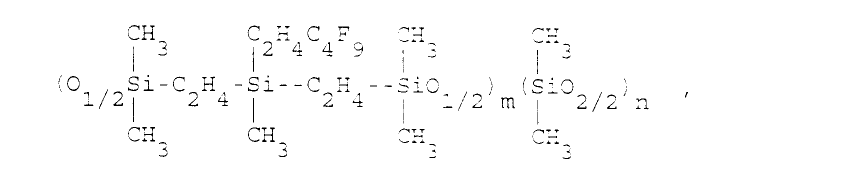 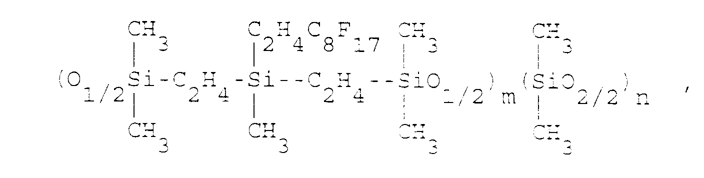
and

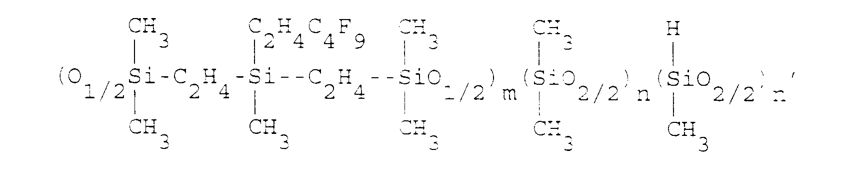

Our fluorine-containing organosilicon copolymers are synthesized, for example, by an equilibration polymerization in which
(a) a straight-chain fluorinated organosilicon polymer with the general formula: 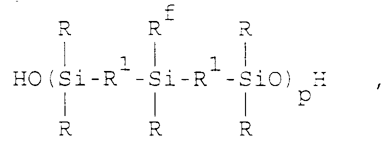 wherein R, R¹, and R^{f} are defined as above and p is a positive integer,
   or
   a cyclic fluorinated organosilicon polymer with the general formula: 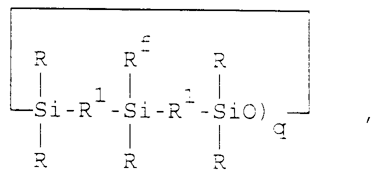 in which R, R¹, and R^{f} are defined as above and q is an integer with a value of at least 3;
   and
(b) an organosiloxane with the general formula:

   R³R₂SiO(RRSiO)ₖSiR₂R³,

   in which R, R, and R³ are defined as above and k is zero or an integer in the range from 1 to 10,000, are heated in the presence of
(c) an acid or base catalyst.

A cyclic organosiloxane (d) with the general formula 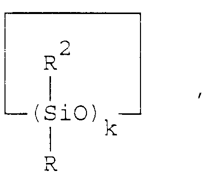
in which R and R are defined as above and k is an integer with a value of 3 to 30, may be added to this polymerization on an optional basis.

The fluorinated organosilicon polymer (a) is synthesized by the hydrolysis of a fluorinated organosilicon compound with the general formula: 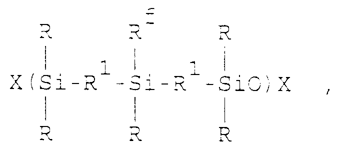
in which R, R¹, and R^{f} are defined as above and X is a halogen atom or a C₁ to C₁₀ alkoxy group. The fluorinated organosilicon polymer (a) us exemplified by polymers with the following formulas, in which p is a positive integer and q is an integer with a value of at least 3: 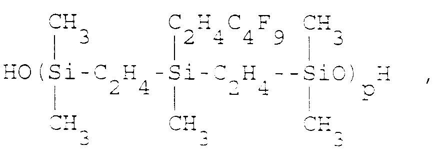 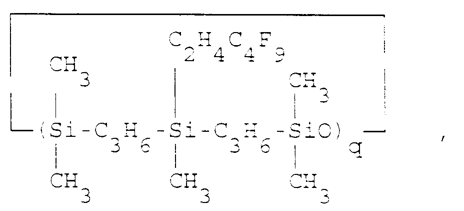 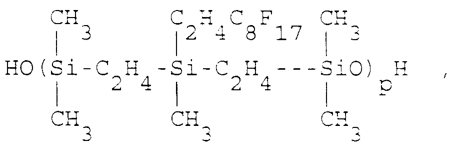 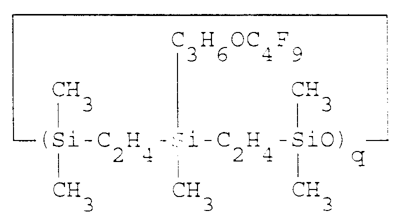
and

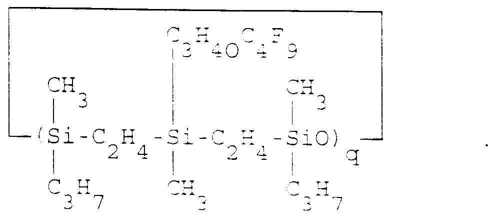

Component (b) functions as an endblocker, and these organosiloxanes are exemplified by siloxanes with the following formulas: 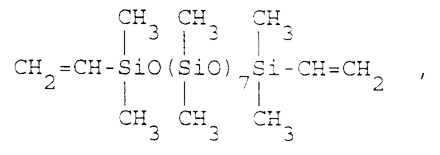 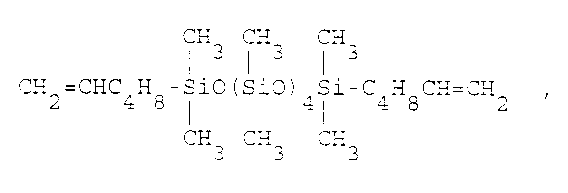 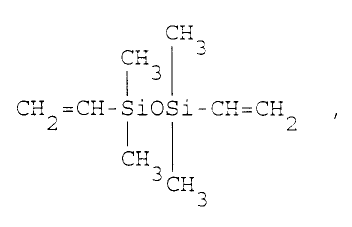
and

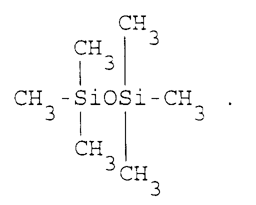

Component (c) is a catalyst that promotes the equilibration polymerization of components (a) and (b) or components (a), (b), and (d). Suitable acid catalysts are exemplified by concentrated sulfuric acid, trifluoromethanesulfonic acid, trifluoroacetic acid, dodecylbenzenesulfonic acid, and acid clays. Accepted base catalysts are exemplified by potassium hydroxide, cesium hydroxide, sodium hydroxide, potassium silanolate, cesium silanolate, and sodium silanolate. This component is added in a catalytic quantity, and preferably at 0.1 to 500 weight parts for each 1 million weight parts of the total of components (a) and (b) or components (a), (b), and (d).

The presence of component (d) is optional unless component (b) is organodisiloxane, in which case component (d) becomes an essential component. This cyclic organosiloxane is exemplified by siloxanes with the following formulas: 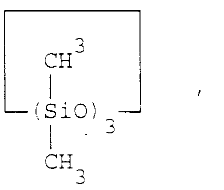 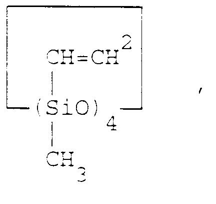
and

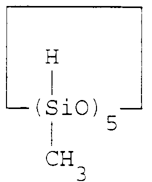

Components (a) to (d) may be combined in any sequence in the preparative method under consideration. One example consists of mixing components (a) to (d) and heating the mixture while stirring. When component (a) is a straight-chain fluorine-containing organosilicon polymer, a suitable sequence consists of mixing components (a) and (c), running a dehydration by heating to at least 100°C, and then adding components (b) and (d).

Another example is fluorinated organosilicon copolymers bearing the HO_{1/2}- group at the molecular chain terminals which are prepared by running an equilibration polymerization wherein the fluorinated organosilicon polymer (a) and cyclic organosiloxane (d) are heated in the presence of the acid or base catalyst (c).

The polymerization conditions in these preparative methods are not critical, but a reaction temperature of 50°C to 220°C is preferred.

Alternatively, our fluorine-containing organosilicon copolymers may be prepared by the addition polymerization of:
(e) an organosiloxane with the general formula:

   R⁵R₂SiO(R₂SiO)ⱼR₂SiR⁵ ,

   in which R is defined as above, R⁵ represents C₂ to C₁₀ alkenyl groups, and j is an integer in the range from 1 to 10,000,
   and
(f) an organohydrogensilane with the general formula

   R^{f}RSiH_{2 ,}

   in which R and R^{f} are defined as above,
   in the presence of
(g) a hydrosilation catalyst.

The C₂ to C₁₀ alkenyl group (R⁵) in the organosiloxane comprising component (e) is exemplified by vinyl, allyl, butenyl, pentenyl, hexenyl, and octenyl. This organosiloxane (e) is exemplified by siloxanes with the formulas: 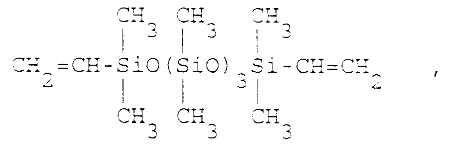
or

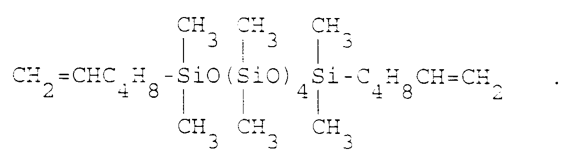

The organohydrogensilane comprising component (f) is exemplified by the silanes C₈F₁₇C₂H₄Si(CH₃)H₂ or C₄F₉C₂H₄Si(CH₃)H₂.
This component is preferably added in a quantity that provides values in the range from 0.5 : 1.0 to 1.5 : 1.0 for the ratio of moles of (e) to moles of (f). A moles of (e) to moles of (f) ratio of precisely 1 : 1 is preferably used when preparation of fluorine-containing organosilicon copolymer having a relatively high molecular weight is desired.

The hydrosilation catalyst comprising component (g) is a catalyst for the addition reaction between the alkenyl groups in component (e) and the silicon-bonded hydrogen atoms in component (f). This hydrosilation catalyst is exemplified by platinum catalysts, rhodium catalysts, palladium catalysts, and organoperoxides. Among these, the platinum catalysts are preferred for their ability to accelerate the addition reaction. These platinum catalysts are exemplified by platinum black, platinum-on-silica, platinum-on-carbon, chloroplatinic acid, alcohol solutions of chloroplatinic acid, platinum-vinylsiloxane complexes, and platinum-olefin complexes. This component is added in a catalytic quantity, and preferably in a quantity that provides 0.1 to 500 weight parts of the meta for each 1 million weight parts of the combined quantity of components (e) and (f).

Components (e) to (g) may be combined in any sequence in the preparative method under consideration. Examples are the gradual addition of component (f) to the heated and stirred mixture of components (e) and (g); the gradual addition of component (g) to the heated and stirred mixture of components (e) and (f); or heating and stirring a mixture of components (e), (f), and (g). When component (f) is a gas, this method consists of the introduction of the gaseous component (f) into the mixture of components (e) and (g).

When component (f) is added in excess relative to component (e), the molecular chain terminals of the resulting fluorine-containing organosilicon copolymer will be a group with the formula HR^{f}RSi-R¹-R₂SiO-, in which R, R¹, and R^{f} are defined as above. When component (e) is added in excess relative to component (f), the molecular chain terminals of the resulting fluorine-containing organosilicon copolymer will be a group with the formula R⁵R₂SiO-, in which R and R⁵ are defined as above. A group with the formula HOR^{f}RSi-R¹-R₂SiO- (R, R¹, and R^{f} are defined as above) is obtained at the molecular chain terminals of the resulting fluorine-containing organosilicon copolymer when the reaction system contains water or an active hydrogen-containing compound such as an alcohol.

The reaction conditions of the above described addition method are not critical. However, when the addition polymerization is run at ambient pressure, the reaction temperature will usually be from room temperature to the boiling point of component (e), or (f) or the organic solvent that may be incorporated. For a relatively low boiling point for component (f) or the organic solvent used, the addition polymerization can also be run under elevated pressure.

Fluorine-containing organosilicon copolymers with higher molecular weights are produced by the above preparative method through the use of organic solvent. Organic solvents usable for this purpose are exemplified by aromatic hydrocarbon solvents such as toluene and xylene; aliphatic hydrocarbon solvents such as hexane, heptane, octane, and nonane; alicyclic hydrocarbon solvents such as cyclohexane, cycloheptane, and cyclooctane; fluorinated aromatic hydrocarbon solvents such as trifluoromethylbenzene, 1,3-bis(trifluoromethyl)benzene, and methylpentafluorobenzene; chlorinated hydrocarbon solvents such as chlorobenzene, trichloroethane, trichlorotrifluoroethane, and chloroform; or fluorinated solvents such as perfluorooctane.

Our fluorinated organosilicon copolymers are viscous liquids at room temperature and have low surface tensions. Moreover, because monovalent fluoroorganic group-bearing silicon atoms are no longer directly bonded to oxygen, these fluorinated organosilicon copolymers are surprisingly resistant to molecular chain scission by ionic compounds such as acid or alkali. As a consequence, our fluorinated organosilicon copolymers are useful as the base oil for lubricants, defoamers/antifoams, and greases, or as additives for hydrocarbon-based lubricants. When R in the organosiloxane unit is an alkenyl group or hydrogen atom, the corresponding fluorinated organosilicon copolymers of the present invention are useful as the base polymer for silicone rubber compositions that cure by organoperoxide, addition, and condensation reactions. The resultant cured products are required to exhibit oil resistance, solvent resistance, steam resistance, transparency and like properties. When silicon-bonded hydrogen is present in a molecular chain terminal position, the corresponding copolymer can be addition-reacted with organofunctional alkene to give an organofunctional group-endblocked fluorinated organosilicon copolymer. When alkenyl is present in a molecular chain terminal position, the corresponding copolymer can be addition-reacted with organofunctional hydrogensilane to give an organofunctional group-endblocked fluorinated organosilicon copolymer. When hydroxyl is present in a molecular chain terminal position, reaction of the corresponding copolymer with organofunctional halosilane, or silazane, yields an organofunctional group-endblocked fluorinated organosilicon copolymer.

### Examples

The invention will be explained in greater detail in the following examples. Unless otherwise indicated, all proportions are on a weight basis.

### Example 1

A fluorinated organosilicon compound with the formula: 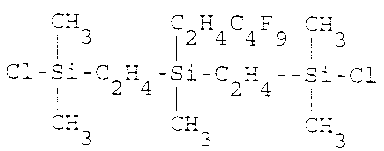
was hydrolyzed in a reactor to give a mixture of straight-chain fluorine-containing organosilicon polymer with the formula: 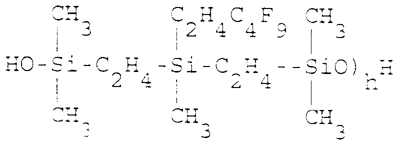
(h is an integer with a value of 1 to 10)
and cyclic fluorine-containing organosilicon polymer with the formula: 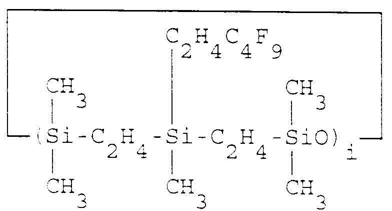
(i is an integer with a value of 3 to 10).
To 20 g of this mixture there were added 1 g of vinyl-endblocked dimethylsiloxane with the formula: 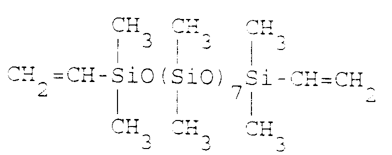
and 5 mg of 10 wt% aqueous potassium hydroxide solution. The reaction mixture was stirred at 160°C for 5 hours under a nitrogen purge. This was followed by neutralization by the addition of dry ice, cooling, dissolution in 100 g of 1,3-bis(trifluoromethyl)benzene, and filtration. Methanol was added to the filtrate, and the supernatant was then separated from the resulting precipitate. The solvent was next evaporated to give a viscous liquid. Analysis of this viscous liquid by ¹³C-nuclear magnetic resonance spectroscopic analysis ¹³C-NMR), ⁹Si-nuclear magnetic resonance spectroscopic analysis (⁹Si-NMR), and infrared spectroscopic analysis (IR) confirmed it to be a fluorinated organosilicon copolymer with the following formula: 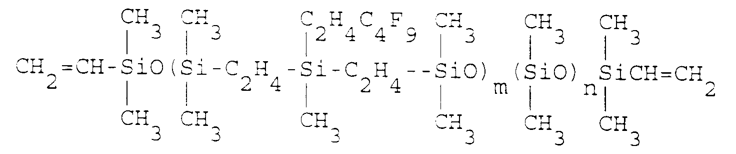
(m and n are each integers in the range from 1 to 10,000 and the m : n ratio is approximately 5 : 1).

Analysis of this fluorinated organosilicon copolymer by gel permeation chromatography (GPC) gave a weight-average molecular weight of 11,000 on a polydimethylsiloxane basis. This fluorinated organosilicon copolymer had a refractive index of 1.408 at 25°C.

### Example 2

The following were placed in a reactor, heated to 70°C, and mixed for 7 hours under a nitrogen flow: 20 g of the mixture of straight-chain and cyclic fluorinated organosilicon polymers whose preparation is described in Example 1, 0.26 g of hexamethyldisiloxane, 1 g of 1,3,5,7-tetramethylcyclotetra-siloxane, and 25 microliters of trifluoromethanesulfonic acid. This was followed by the addition of 100 g of 1,1,2-trichlorotrifluoroethane and 10 g of zinc oxide, then stirred for another 2 hours, and finally filtration. Methanol was added to the filtrate thus obtained, the supernatant was then separated from the resulting precipitate, and the solvent was evaporated to give a viscous liquid. Analysis of this viscous liquid by ¹³C-NMR, ⁹Si-NMR, and IR confirmed it to be fluorinated organosilicon copolymer with the following formula. 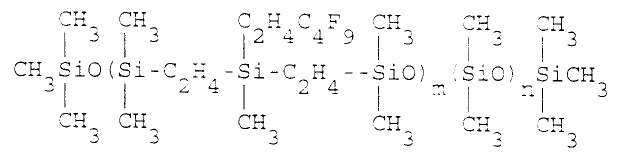
(m and n are each integers in the range from 1 to 10,000 and the m : n ratio is approximately 5 : 2).

Analysis of this fluorinated organosilicon copolymer by GPC gave a weight-average molecular weight of 4,000 on a polydimethylsiloxane basis.

### Example 3

There were introduced into a reactor 20.4 g of vinyl-endblocked dimethylsiloxane of the formula: 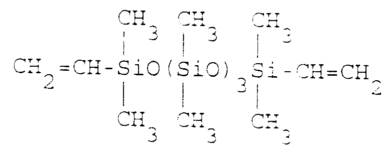
and 20 g of 1,3-bis(trifluoromethyl)benzene. This was followed by the introduction of sufficient platinum-divinyltetramethyldi-siloxane complex solution to provide 100 ppm of platinum metal in the mixture. The contents were then heated to 90°C while stirring to homogeneity. To this stirred mixture was gradually added dropwise, in the temperature range from 90°C to 115°C a mixture of 24.6 g of 1H,1H,2H,2H-perfluorooctylethylmethylsilane (C₈F₁₇C₂H₄Si(CH₃)H₂) and 15 g off 1,3-bis(trifluoromethyl)benzene. The mixture was stirred at 115°C for an additional 1 hour after the completion of addition. One drop of 1H,1H,2H,2H-perfluorooctylethylmethyl-silane was then added and stirring was continued for another 1 hour. After the end of this period, the volatiles were distilled off under reduced pressure to give a viscous liquid. Analysis of this liquid by ¹³C-NMR, ⁹Si-NMR, and IR confirmed it to be fluorinated organosilicon copolymer of the following formula, is which Y = -C₂H₄C₈F₁₇: 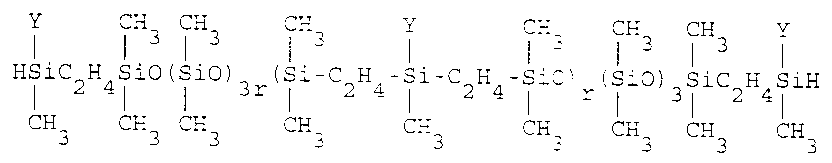
(r is an integer with a value of at least 1).

Analysis of this fluorinated organosilicon copolymer by GPC gave a weight-average molecular weight of 9,000 on a polydimethylsiloxane basis. The yield of fluorinated organosilicon polymer was 93% as determined from its peak area.

## Claims

1. A fluorine-containing organosilicon copolymer whose main chain comprises:
(A) at least one silalkylenesiloxane unit having the formula 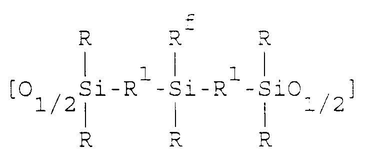 wherein R represents a monovalent hydrocarbon group having 1-10 carbon atoms which is free of aliphatic unsaturation, R¹ represents an alkylene group having 2-10 carbon atoms and R^{f} represents a fluorine-containing monovalent organic group which contains at least four carbons and at least two -CF₂- groups; and
(B) at least one organosiloxane unit with the formula
(RRSiO_{2/2})
wherein R is as defined above and R is selected from a hydrogen atom or a monovalent hydrocarbon group having 1-10 carbon atoms.

2. The fluorine-containing organosilicon copolymer according to claim 1, in which R^{f} is an organic group selected from organic groups with the formulas:
(i) -(CH₂)ₓC_{y}F_{(2y + 1)} in which x and y are both integers with values of at least 2,
(ii) -(CH₂)ₓO_{y}-C_{y}F_{(2y + 1)} in which x and y are both integers with values of at least 2,
(iii) -(CH₂)ₓO(CH₂)_{z}C_{y}F_{(2y + 1)} in which x and y are both integers with values of at least 2 and z is an integer with a value of at least 1,
(iv) -C₆H₄(CH₂)ₓC_{y}F_{(2y + 1)} in which x and y are both integers with values of at least 2 and
(v) -C₆H₄O(CH₂)ₓC_{y}F_{(2y + 1)} in which x and y are both integers with values of at least 2.

3. The fluorine-containing organosilicon copolymer according to claim 1, wherein the molecular chain terminals are selected from the group consisting of
(i) groups of the formula R³R₂SiO- wherein R represents a monovalent hydrocarbon group having 1-10 carbon atoms which is free of aliphatic unsaturation and R³ is selected from the group consisting of C₁ to C₁₀ monovalent hydrocarbon groups, hydroxyl group, and hydrogen atom,
(ii) groups with the formula R⁴R^{f}RSi-R¹-R₂SiO- wherein R is as defined above, R¹ represents a C₂ to C₁₀ alkylene groups, R⁴ is selected from the group consisting of a hydrogen atom and hydroxyl group, and R^{f} represents a fluorine-containing monovalent organic group that contains at least four carbons and at least two -CF₂- groups, and
(iii) a hydroxyl group.

4. The fluorine-containing organosilicon copolymer according to claim 1, wherein R is selected from methyl or phenyl radicals.

5. The fluorine-containing organosilicon copolymer according to claim 1, wherein R¹ is selected from the group consisting of ethylene, propylene, butylene and hexylene.

6. The fluorine-containing organosilicon copolymer according to claim 1, wherein R^{f} is represented by a formula selected from -C₂H₄C₄F₉ or -C₃H₆C₄F₉.
